# EUROPÄISCHE PATENTSCHRIFT

(11) **EP 1 759 427 B1**
(45) Veröffentlichungstag und Bekanntmachung des Hinweises auf die Patenterteilung: **12.08.2009**
(21) Anmeldenummer: 05758043.3
(22) Anmeldetag: 16.06.2005
(51) Int. Cl.: H01L 41/04, G05B 17/02

(54) **VERFAHREN ZUM BETREIBEN EINES PIEZOAKTORS**
METHOD FOR THE OPERATION OF A PIEZO ACTUATOR
PROCEDE POUR FAIRE FONCTIONNER UN ACTIONNEUR PIEZOELECTRIQUE

(30) Priorität: 24.06.2004 DE 102004030547; 08.09.2004 DE 102004043484
(43) Veröffentlichungstag der Anmeldung: 07.03.2007
(73) Patentinhaber: Physik Instrumente (PI) GmbH & Co. KG, 76228 Karlsruhe (DE)
(72) Erfinder: ZHAO XIANBIN, Oskar, Dr., 200135 Shangai (CN)
(74) Vertreter: Kruspig, Volkmar
(86) Internationale Anmeldenummer: PCT/EP2005/006495
(87) Internationale Veröffentlichungsnummer: WO 2006/000337

(56) Entgegenhaltungen:
- DE-A1- 10 250 670
- GOLDFARB M ET AL: "Behavioral implications of piezoelectric stack actuators for control of micromanipulation" PROCEEDINGS 1996 IEEE INTERNATIONAL CONFERENCE ON ROBOTICS AND AUTOMATION, MINNEAPOLIS, MN, USA, Bd. 1, 1996, Seiten 226-231, XP010162756 ISBN: 0-7803-2988-0
- LEE S-H ET AL: "Modeling piezoceramic transducer hysteresis in the structural vibration control problem" JOURNAL OF THE ACOUSTICAL SOCIETY OF AMERICA, Bd. 108, Nr. 6, Dezember 2000 (2000-12), Seiten 2843-2855, XP012002041 ISSN: 0001-4966
- LEE B-R ET AL: "Precision control of piezoelectric actuator using inverse hysteresis model and neuro control" PROCEEDINGS KORUS 2003, 7TH KOREA-RUSSIA INTERNATIONAL SYMPOSIUM ON SCIENCE AND TECHNOLOGY, ULSAN, SOUTH KOREA, Bd. 1, 2003, Seiten 273-278, XP010651497 ISBN: 89-7868-617-6

## Beschreibung

Die Erfindung betrifft ein Verfahren zum Betreiben eines Piezoaktors durch Bereitstellen einer Steuerspannung zum Erhalt eines gewünschten Aktor-Verstellweges unter Beachtung des hysteresebehafteten Übertragungsverhaltens aufgrund der Eigenschaften des jeweiligen piezoelektrischen Materials und Online-Kompensation dieser Eigenschaften mittels geeigneter Modellbildung, insbesondere für hochdynamische Anwendungen, gemäß Oberbegriff des Patentanspruchs 1.

Aufgrund der Fähigkeit piezoelektrischer Materialien, elektrische Energie in mechanische Arbeit umwandeln zu können, werden diese seit längerer Zeit zur Realisierung von speziellen Aktoren genutzt. Gegenüber herkömmlichen Antriebsprinzipien weisen piezoelektrische Werkstoffe den Vorteil auf, dass eine Umwandlung der Energie nahezu verzögerungsfrei erfolgt. Es lassen sich auf diese Weise Aktoren mit einer breitbandigen Übertragungscharakteristik realisieren. Ein weiterer Vorteil bei der Anwendung piezoelektrischer Aktoren sind hohe erzielbare Stellkräfte, ein geringer Leistungsverbrauch im quasistatischen Betrieb, eine hohe Steifigkeit und ein sehr breites Wegauflösungsvermögen.

Zum Erzeugen möglichst großer Auslenkungen werden piezoelektrische Aktoren mit hohen elektrischen Spannungen angesteuert. Infolge dieser hohen elektrischen Spannungen laufen im Inneren des piezoelektrischen Materials mikrophysikalische Domänenprozesse ab. Diese erzeugen auf makroskopischer Ebene Hysterese-, Kriech- und Sättigungseffekte im Übertragungsverhalten des piezoelektischen Wandlers. Bedingt durch diese Tatsache weicht das reale Übertragungsverhalten piezoelektrischer Aktoren von der ideallinearen Kennlinie ab. Es kommt also aufgrund dieser Tatsache der Vorteil des Wegauflösungsvermögens des Antriebs bei Positionieraufgaben nicht voll zur Geltung, weil in diesem Fall die momentane Abweichung zwischen Positions-Sollwert und Positions-Istwert maßgeblich durch Hysteresefehler bestimmt wird. Außerdem werden bei harmonischer, periodischer Ansteuerung des Aktors unerwünschte Oberwellen erzeugt, die Eigenschwingungen anregen können.

Daher besteht die Notwendigkeit, dass je nach Anwendung vorab eine Kompensation der im elektrischen Großsignalbetrieb entstehenden Effekte, insbesondere der Hystereseeffekte bzw. der Nichtlinearität erfolgen muss.

Zur Linearisierung des Übertragungsverhaltens piezoelektrischer Wandler sind verschiedene Methoden bekannt. Zum einen findet eine Ladungsansteuerung anstelle einer Spannungsansteuerung statt. Zum anderen ist eine Regelung der Aktorausgangsgröße oder aber auch eine inverse Steuerung mit offener Wirkungskette möglich.

Beim Konzept der Ladungsansteuerung wird der Umstand ausgenutzt, dass bei piezoelektrischen Aktoren zwischen der Aktorauslenkung und der elektrischen Ladung des Aktors ein bestimmter funktionaler Zusammenhang besteht. Ein Nachteil dieser Methode ist jedoch, dass die zur Messung der Aktorladung notwendige Integration des Lade- und Entladestroms aufgrund des endlichen Isolationswiderstands des Aktors fehlerbehaftet ist. Dieser Fehler steigt darüber hinaus mit der Zeit an. Um diesen Integrationsfehler zu beseitigen, wird bei einer Realisierung der Ladungssteuerung der hierfür benötigte Ladungssensor als Hochpass ausgeführt. Damit ist aber die Ladungssteuerung für den dynamischen und den quasistatischen, nicht jedoch für einen statischen Betrieb geeignet.

Bei der Regelung der Aktorausgangsgröße ist der Vorteil gegeben, dass bei entsprechender Wahl des Sensors und Auslegung des Reglers nicht nur eine nahezu vollständige Linearisierung des Aktor-Übertragungsverhaltens erreicht wird, sondern auch noch eine wirksame Unterdrückung externer Störeinflüsse möglich ist. Diese Variante benötigt jedoch einen externen Sensor zur Erfassung der Regelgröße.

Letztendlich kann eine Kombination von nichtidealen Übertragungsanteilen in offener Wirkungskette durch Vorschalten einer inversen Kompensationssteuerung vorgenommen werden. Die Aufgabe einer solcher Steuerung besteht darin, aus einem vorgegebenen Steuersignal, das dem gewünschten Ausgangssignal des realen Systems entspricht, ein Eingangssignal für das reale System so zu erzeugen, dass das tatsächliche Ausgangssignal des realen Systems mit dem vorgegebenen Steuersignal bis auf die physikalische Dimension vollständig übereinstimmt. Bei einer solchen Lösungsvariante kann auf den Sensor zur Erfassung der Aktorausgangsgröße verzichtet werden.

Verschiedene Modelle zur Beschreibung des hysteresebehafteten Übertragungsverhaltens sind in Kuhnen, Klaus: Inverse Steuerung piezoelektrischer Aktoren mit Hysterese-, Kriech und Superpositionsoperatoren; Shaker-Verlag GmbH; 2001, oder DE 102 50 670 A1 erläutert.

Alle bekannten Verfahren zur inversen Steuerung piezoelektrischer Aktoren unter Beachtung von Hystereseoperatoren haben jedoch den Nachteil eines erheblichen Rechenaufwands mit der Folge, dass eine Integration, insbesondere zum Online-Steuern von Aktoren im hochdynamischen Betrieb nicht oder nur eingeschränkt möglich ist.

Die Ansteuerung von Piezoaktoren mit Modellierung ihrer Hystereseeigenschaften basierend auf der Reihenschaltung eines nichtlinearen Kondensators und eines nichtlinearen Widerstands ist aus Goldfarb, M. et al: Behavioral implications of piezoelectric stack actuators for control of micromanipulation, PROCEEDINGS 1996 IEEE INTERNATIONAL CONFERENCE ON ROBOTICS AND AUTOMATION, Seiten226-231 oder LEE S.-H. et al: Modeling piezoceramic transducer hysteresis in the structural vibration control problem, JOURNAL OF THE ACOUSTICAL SOCIETY OF AMERICA, Bd. 108, Nr. 6, 2000, Seiten 2843-2855 bekannt.

Aus dem Vorgenannten ist es daher Aufgabe der Erfindung, ein weiterentwickeltes Verfahren zum Betreiben eines Piezoaktors durch Bereitstellen einer Steuerspannung zum Erhalt eines gewünschten Aktor-Verstellweges unter Beachtung des hysteresebehafteten Überträgungsverhaltens aufgrund der Eigenschaften des piezoelektrischen Materials anzugeben, welches einfach umsetzbar und das als rein elektrisches Modell auch bei hochdynamischen Bewegungen anwendbar ist.

Die Lösung der Aufgabe der Erfindung erfolgt mit einem Verfahren in seiner Definition nach Patentanspruch 1, wobei die Unteransprüche mindestens zweckmäßige Ausgestaltungen und Weiterbildungen darstellen.

Demnach wird bei dem erfindungsgemäßen Verfahren zum Betreiben eines Piezoaktors durch Bereitstellen einer Steuerspannung zum Erhalt eines gewünschten Aktor-Verstellweges unter Beachtung des hysteresebehafteten Übertragungsverhaltens aufgrund der Eigenschaften des piezoelektrischen Materials davon ausgegangen, dass für die Modellbildung zur Steuerspannungs-Ermittlung die Hystereseeigenschaften als eine elektrisch beschreibbare Größe betrachtbar sind, wobei sich diese elektrisch beschreibbare Größe als eine elektrische Parallelschaltung mehrerer Zweige 1 bis n ergibt und hierbei jeder Zweig eine Reihenschaltung eines nichtlinearen Widerstands R1 bis Rn und einer nichtlinearen Kapazität C1 bis Cn aufweist.

Der Zweig aus R1 und C1 entspricht hierbei dem idealen Ladungsverhalten des Piezoaktors. Die weiteren Zweige R2 bis Rn und C2 bis Cn repräsentieren die Materialeigenschaften des realen Aktors.

Die gesamte mechanische Bewegung M des Aktors ergibt sich aus der Summe der Ladungen der durch die Zweige gebildeten Polynomkette.

Nach Eingabe der Sollposition wird die zum Erreichen dieser Sollposition notwendige Sollladungsmenge berechnet. Im Nachgang wird die Differenz zum Istwert der Ladung bestimmt und hierauf gestützt werden die Ladungsänderungen aller Kondensatoren C1 bis Cn ermittelt und die hierfür notwendigen Spannungsänderungen sowie die resultierende Gesamtsteuerspannung, d.h. Anschlußspannung berechnet.

Wenn die Materialeigenschaften des Aktors bekannt sind, kann mit dem vorgestellten Verfahren ohne Einsatz eines Positionssensors gearbeitet werden.

Im Sinne einer Autokalibrierung zur Bestimmung der Materialkonstanten des Aktors ist es möglich, den Aktor zwischen zwei vorgegebenen, bekannten Punkten zu bewegen und die hierfür notwendigen Ladungen zu ermitteln. Daraus lassen sich dann die die Materialeigenschaften des jeweiligen Aktors repräsentierenden Teilladungen und Kapazitäten bestimmen.

Das Verfahren kann sowohl softwareseitig, insbesondere als Firmware-Modul realisiert werden, wobei auch eine Ausführung als Hardware-realisierter Berechnungsfunktionsblock möglich ist, welcher einem an sich bekannten Spannungsverstärker vorgeschaltet ist.

Bei dem vorgestellten Verfahren wird also die Hysterese als eine Reihenschaltung einer Kapazität C mit einem Widerstand R interpretiert, wobei mehrere derartige Zweige wiederum parallel geschaltet sind. Ein erster bis n-ter parallel geschalteter Zweig, die Hystereseeigenschaften repräsentierend, kann dabei so interpretiert werden, als dass in einer bestimmten Zeit einer der parallelen Zweige und der dort befindliche Kondensator nicht voll geladen oder entladen wurde oder dass sich der Ladeprozess aufgrund der Materialeigenschaften bzw. Materialkonstanten des jeweiligen Aktors langsamer vollzieht. Abweichend von den idealen Eigenschaften einer Einkristallkeramik ist z.B. der nichtlineare Anteil der Widerstände im jeweiligen Zweig als z.B. innere Reibung zwischen den einzelnen Kristallelementen interpretierbar.

Die Erfindung soll nachstehend anhand eines Ausführungsbeispiels und unter Zuhilfenahme von Figuren näher erläutert werden.

Hierbei zeigen:
- Fig. 1: das elektrische Ersatzschaltbild, welches die Grundlage des erfindungsgemäßen Verfahrens bildet;
- Fig. 2: ein Blockschaltbild mit der Spannungsberechnung auf der Basis des R/C-Ersatzschaltbilds und
- Fig. 3: einen Programmablaufplan, welcher die Verfahrensabfolge darstellt.

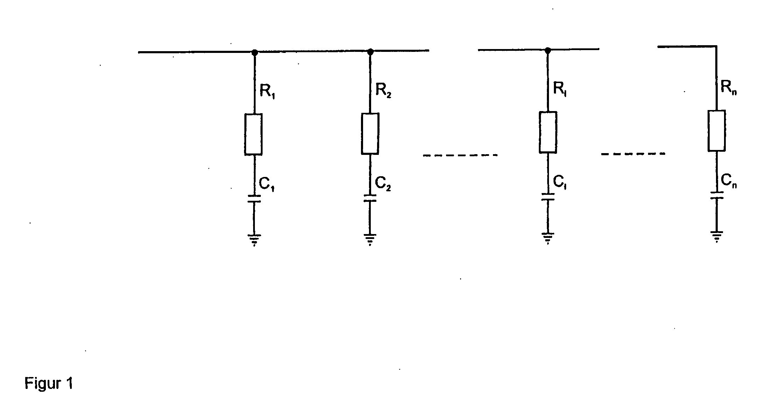

Gemäß Fig. 1 wird bei dem Verfahren zum Betreiben eines Piezoaktors durch Bereitstellen einer Steuerspannung zum Erhalt eines gewünschten Aktor-Verstellweges bezüglich der hysteresebehafteten Eigenschaften bzw. des Übertragungsverhaltens zum Beschreiben dieser auf ein rein elektrisches Ersatzschaltbild zurückgegriffen, das eine Parallelschaltung verschiedener Zweige aufweist. Jeder Zweig stellt sich wiederum als Reihenschaltung eines Widerstands und einer Kapazität dar. Die Reihenschaltung R1 und C1 repräsentiert das ideale Ladungsverhalten des Piezoaktors; hingegen die Zweige mit den Reihenschaltungen R2/C2 bis Rn/Cn das Ladungsverhalten bedingt durch die jeweiligen Materialeigenschaften des Piezoaktors in nichtlinearer Hinsicht.

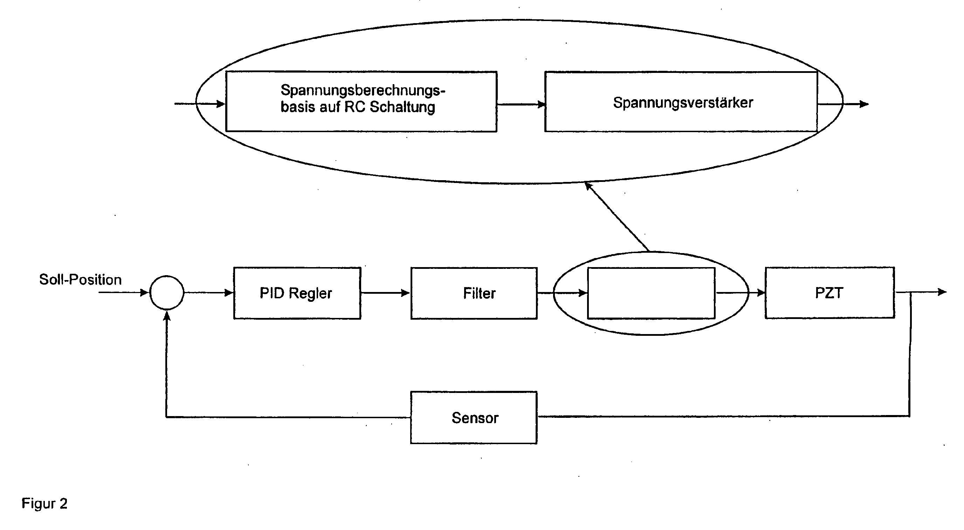

Die Widerstände R1 bis Rn und die Kondensatoren C1 bis Cn sind demnach nichtlineare Elemente. Die unter Beachtung des Ersatzschaltbilds ermittelte Spannung wird durch einen an sich bekannten Spannungsverstärker (Fig. 2) erzeugt. Diese mit dem Spannungsverstärker erzeugte Spannung gelangt dann auf den Piezoaktor PZT, welcher den gewünschten Verstellweg erzeugt.

Wie in der Fig. 2 dargestellt, kann der mittels eines digitalen Signalprozessors realisierte Funktionsblock zur Spannungsberechung auch Bestandteil eines Spannungsverstärkers sein, so dass mit Verstärkern einfacher, linearer Charakteristik gearbeitet werden kann.

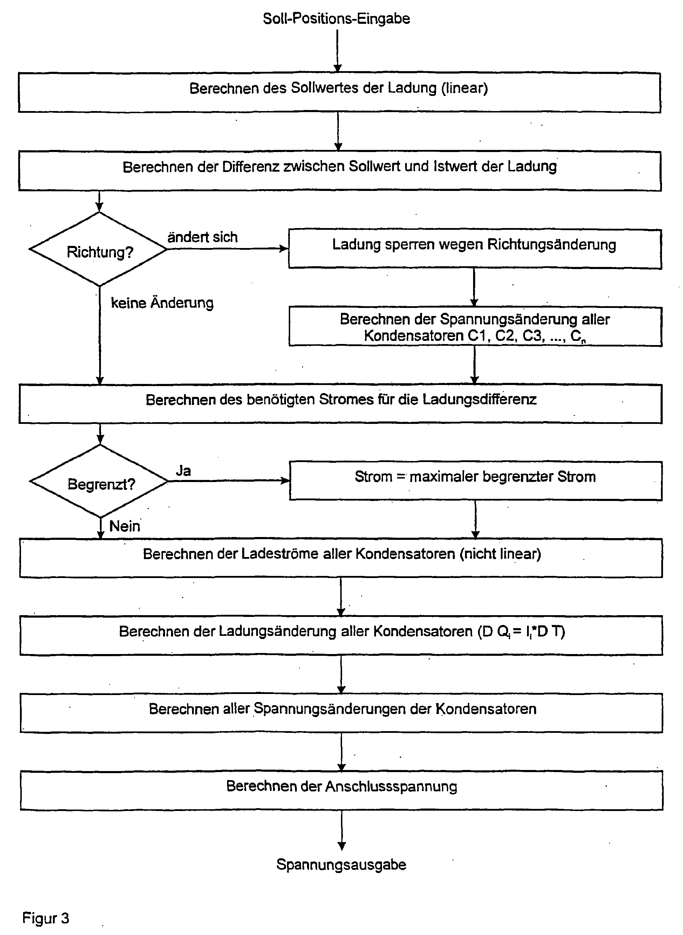

Unter Hinweis auf den Programmablaufplan nach Fig. 3 wird gemäß dem Blockschaltbild nach Fig. 2 in einem ersten Schritt eine Eingabe der zu erreichenden Sollposition vorgenommen und hiernach der Sollwert der Ladung berechnet, der für das Erreichen dieser Sollposition notwendig ist. In einem nächsten Schritt wird die Differenz zwischen dem Sollwert und dem momentanen Istwert der Ladung bestimmt. Bei Änderung der Bewegungsrichtung ist dann auch eine Neuberechnung der Spannungsänderungen zwischen den einzelnen Kondensatoren gemäß Ersatzschaltbild notwendig. Für den Fall, dass keine Richtungsänderung, sondern eine fortschreitende Bewegung in der bereits vorliegenden Richtung gegeben ist, werden die benötigten Stromgrößen zum Erreichen der gewünschten Ladungsdifferenz, respektive zum Ausgleich dieser ermittelt. Aus dieser Berechnung erfolgt dann das Ermitteln der Ladeströme der jeweiligen nichtlinearen Kondensatoren und der erforderlichen Ladungsänderungen.

Wenn die Ladungsänderungswerte bekannt sind, kann hieraus die dafür notwendige Spannungsänderung für den jeweiligen Kondensator ermittelt, die notwendite Anschlussspannung bestimmt und die Spannungswertausgabe vorgenommen werden.

Da das vorliegende Verfahren auf einem elektrischen Modell basiert, kann in sehr einfacher Weise die Strombegrenzung der Verstärker berücksichtigt werden.

## Patentansprüche

1. Verfahren zum Betreiben eines Piezoaktors durch Bereitstellen einer Steuerspannung zum Erhalt eines gewünschten Aktor-Verstellweges unter Beachtung des hysteresebehafteten Übertragungsverhaltens aufgrund der Eigenschaften des piezoelektrischen Materials und Online-Kompensation dieser Eigenschaften mittels geeigneter Modellbildung, insbesondere für hochdynamische Anwendungen,
**dadurch gekennzeichnet, dass**
- für die Modellbildung zur Steuerspannungs-Ermittlung die Hystereseeigenschaften als eine elektrisch beschreibbare Größe betrachtet werden, wobei sich diese als eine elektrische Parallelschaltung mehrerer Zweige 1 bis n ergeben und hierbei jeder Zweig eine Reihenschaltung eines nichtlinearen Widerstands R1 bis Rn und einer nichtlinearen Kapazität C1 bis Cn aufweist,
- weiterhin der Zweig aus R1 und C1 dem idealen Ladungsverhalten des Piezoaktors entspricht und die weiteren Zweige die Materialeigenschaften des realen Aktors repräsentieren,
- die gesamte mechanische Bewegung M des Aktors sich aus der Summe der Ladungen der durch die Zweige gebildeten Polynomkette ergibt,
- nach Eingabe der Sollposition die zum Erreichen dieser notwendige Solliadungsmenge berechnet, die Differenz zum Istwert der Ladung bestimmt und hierauf gestützt die Ladungsänderungen aller Kapazitäten C1 bis Cn ermittelt sowie die dafür notwendigen Spannungsänderungen und die resultierende Gesamtsteuer- bzw- Anschlußspannung berechnet werden.

2. Verfahren nach Anspruch 1,
**dadurch gekennzeichnet, dass**
durch Bewegen des Aktors zwischen zwei vorgegebenen bekannten Punkten die hierfür notwendigen Ladungen bestimmt und hieraus die die Materialeigenschaften des jeweiligen Aktors repräsentierenden Teilladungen und Kapazitäten ermittelt werden.

3. Verfahren nach Anspruch 1 oder 2,
**gekennzeichnet durch**
die Ausführung als ein Hardware-realisierter Berechnungs-Funktionsblock, welcher einem an sich bekannten Spannungsverstärker vorgeschaltet oder in diesen integriert ist.

## Claims

1. Method for operating a piezo actuator by supplying a control voltage so as to obtain a desired displacement path of the actuator by taking into account the hysteresis-affected transmission behavior as a result of the properties of the piezoelectric material and compensating said properties online by forming an adequate model, especially for highly dynamic applications,
**characterized in that**
- the hysteresis properties are considered as an electrically described variable for forming the model in order to determine the control voltage, said variable representing a parallel electrical connection of several branches 1 to n, each branch being provided with a series connection of a non-linear resistor R1 to Rn and a non-linear capacitor C1 to Cn,
- further, the branch comprising of R1 and C1 represents the ideal charging behavior of the piezo actuator while the other branches represent the material properties of the real actuator,
- the whole mechanical movement M of the actuator is obtained from the sum of the charges of the polynomial chain formed by the branches,
- after inputting the desired position, the desired amount of charge required for reaching the desired position is calculated, the difference between said desired amount of charge and the actual charge value is determined and, based thereon, the changes in the charges of all capacitors C1 to Cn are determined and the voltage changes required therefor as well as the resulting total control voltage or supply voltage are calculated.

2. Method according to claim 1,
**characterized in that**
by moving the actuator between two predetermined known points the charges required therefor are determined, and from this the partial charges and capacitances representing the material properties of the respective actuator are detected.

3. Method according to claim 1 or 2,
**characterized by**
the execution as a hardware-realized functional calculation block, which is provided upstream of a voltage amplifier known per se or is integrated in the same.

## Revendications

1. Procédé pour le fonctionnement d'un actionneur piézo-électrique en préparant une tension de commande pour obtenir un trajet de déplacement d'actionnement souhaité et en respectant le rapport de transmission, affecté d'une hystérésis, en raison de la propriété du matériau piézo-électrique et de la compensation en ligne de cette propriété au moyen de la formation d'un modèle approprié, en particulier pour des applications fortement dynamiques,
**caractérisé en ce que**
- pour la formation du modèle destiné à la détermination de la tension de commande, on observe les propriétés d'hystérésis comme étant une grandeur susceptible d'être décrite sur le plan électrique, cette grandeur se présentant sous la forme d'un circuit électrique parallèle de plusieurs ramifications 1 à n, et chaque ramification présente ici un circuit série d'une résistance non linéaire R1 à Rn et d'une capacité non linéaire C1 à Cn,
- la ramification formée par R1 et C1 correspond au comportement de charge idéal de l'actionneur piézo-électrique et les autres ramifications représentent les propriétés du matériau de l'actionneur réel,
- le mouvement mécanique global M de l'actionneur résulte de la somme des charges des chaînes polynomiales formées par les ramifications,
- après saisie de la position de consigne, on calcule la quantité de la charge de consigne nécessaire pour atteindre cet position de consigne, on détermine la différence vis-à-vis de la valeur réelle de la charge et, en se basant sur celle-ci, on détermine les variations de charge de toutes les capacités C1 à Cn, ainsi que l'on calcule les variations de tension nécessaires à cet effet et la tension de commande globale résultante ou respectivement la tension de raccordement résultante.

2. Procédé selon la revendication 1,
**caractérisé en ce que,** en déplaçant l'actionneur entre deux points connus prédéterminés, on définit les charges nécessaires à cet effet et, à partir de celles-ci, on détermine les charges partielles et les capacités partielles qui représentent les propriétés du matériau de l'actionneur respectif.

3. Procédé selon la revendication 1 ou 2,
**caractérisé par** la réalisation sous forme de blocs fonctionnels de calcul réalisés sous forme de composants matériels, branchés en amont d'un amplificateur de tension connu ou intégré dans celui-ci.
